# FASCICULE DE BREVET EUROPEEN

(11) **EP 1 776 561 B1**
(45) Date de publication et mention de la délivrance du brevet: **30.04.2014**
(21) Numéro de dépôt: 05793660.1
(22) Date de dépôt: 27.07.2005
(51) Int. Cl.: G01C 23/00

(54) **DISPOSITIF D'AFFICHAGE DE SECOURS D'UN AERONEF**
Vorrichtung zur Notanzeige in einem Flugzeug
Device for emergency display in an aircraft

(30) Priorité: 09.08.2004 FR 0408746
(43) Date de publication de la demande: 25.04.2007
(73) Titulaire: AIRBUS OPERATIONS (SAS), 31060 Toulouse (FR)
(72) Inventeur: BREHIN, Didier, F-31000 Toulouse (FR); DATTLER, Stéphane, F-31450 Montlaur (FR)
(74) Mandataire: Hauer, Bernard
(86) Numéro de dépôt international: PCT/FR2005/001949
(87) Numéro de publication internationale: WO 2006/024744

(56) Documents cités:
- GB-A- 2 249 417
- US-A- 4 598 292
- US-A- 6 112 141
- US-A1- 2003 030 911

## Description

La présente invention concerne un dispositif d'affichage de secours d'un aéronef, en particulier d'un avion de transport civil.

Un tel dispositif d'affichage de secours doit permettre d'afficher dans le poste de pilotage de l'aéronef des informations minimales [informations de pilotage (vitesse, altitude, attitude) et informations de navigation] qui sont représentatives du vol de l'aéronef, en cas de panne d'un dispositif d'affichage principal de l'aéronef, en particulier un écran de navigation de type "ND" ("Navigation Display") ou un écran primaire de pilotage de type "PFD" ("Primary Flight Display"), ou en cas de panne d'un système [ADIRS ("Air Data and Inertial Reference System"), FMS ("Flight Management System"), ...] élaborant des informations habituellement affichées sur lesdits dispositifs d'affichage principal de l'aéronef (ND, PFD, ...).

On connaît un premier dispositif d'affichage de secours du type "ISIS" ("Integrated Standby Instrument System"), qui affiche des informations de pilotage (altitude, vitesse et attitude) de l'aéronef sur un écran, dont l'interface homme/machine ressemble à celle de l'écran PFD. Le document FR-2 784 457 est relatif à un tel premier dispositif d'affichage de secours.

On connaît également un second dispositif d'affichage de secours du type "DDRMI" ("Digital Distance and Radio Magnetic Indicator") qui affiche des informations de navigation, telles que le cap de l'aéronef, ainsi que sa position par rapport à des balises usuelles, par exemple de type "VOR" ("VHF Omnidirectional Range") ou de type "DME" ("Distance Measuring Equipment").

Ces deux dispositifs d'affichage de secours ISIS et DDRMI affichent donc des informations très différentes.

Toutefois, aucun de ces dispositifs ISIS et DDRMI n'est en mesure, à lui seul, d'afficher les informations de pilotage et de navigation minimales précitées. De plus, même lorsqu'un aéronef comporte simultanément ces deux dispositifs ISIS et DDRMI, il subsiste des inconvénients importants dans l'affichage de secours. En effet, dès lors que le dispositif ISIS est en panne ou n'est pas disponible, l'aéronef ne peut pas décoller pour des raisons de sécurité, puisque l'affichage de certaines informations ne serait alors pas garanti en cas de panne des dispositifs d'affichage principaux (PDF, ND, ...) pendant le vol. En outre, le dispositif DDRMI ne couvre pas les zones géographiques où il n'existe pas de signal VOR, ni de signal DME (zones océanographiques, zones terrestres mal équipées en stations VOR et DME).

Par ailleurs, par le document US 2002/0123830, on connaît un écran primaire de pilotage particulier qui, outre les informations affichées usuellement sur un écran PFD (vitesse, altitude, attitude), présente également une échelle de cap sur la ligne d'horizon, sur laquelle sont affichés un premier symbole représentant la route suivie par l'aéronef et un second symbole représentant la route à suivre pour voler vers le prochain point de route. Cet écran connu ne peut donc pas être utilisé, comme dispositif d'affichage de secours, puisqu'il n'affiche pas les informations de navigation minimales nécessaires, en particulier il ne permet pas de connaître la position exacte du prochain point de route. De plus, comme l'échelle de cap est située directement sur la ligne d'horizon, la lecture des informations est rendue difficile.

Par ailleurs, on connaît :
- par le document US-2003/0030911, un dispositif d'affichage tête haute susceptible d'afficher, en cas de problèmes d'urgence, des informations sur des paramètres de l'aéronef et notamment l'attitude, l'altitude et le cap ; et
- par le document GB-2 249 417, un système d'aide à la navigation d'un véhicule, prévoyant d'afficher une carte avec des zones de contrôle de navigation.

La présente invention a pour objet un dispositif d'affichage de secours qui permet de remédier aux inconvénients précités.

A cet effet, selon l'invention, ledit dispositif d'affichage de secours du type comportant :
- un ensemble de sources d'informations ;
- une unité de traitement d'informations susceptible de traiter des informations issues dudit ensemble de sources d'informations ; et
- un moyen d'affichage qui est susceptible de présenter sur au moins un écran de visualisation des informations traitées issues de ladite unité de traitement d'informations et qui est formé de manière à présenter sur ledit écran de visualisation :
   ■ des indicateurs de pilotage illustrant au moins des informations de vitesse, d'altitude et d'attitude de l'aéronef ; et
   ■ une échelle de cap comprenant un premier signe caractéristique illustrant le cap d'au moins un prochain point de route d'un plan de vol de l'aéronef,
   est remarquable en ce que ladite échelle de cap est indépendante desdits indicateurs de pilotage sur ledit écran de visualisation, et en ce que ledit moyen d'affichage présente de plus sur ledit écran de visualisation une valeur quantitative qui illustre la distance restant à parcourir à l'aéronef pour atteindre ledit prochain point de route et qui est associée audit premier signe caractéristique.

Ainsi, grâce à l'invention, on connaît à la fois le cap et la distance du prochain point de route, ce qui permet de connaître exactement ce point de route. On dispose ainsi des informations de navigation minimales nécessaires au vol. Le dispositif d'affichage de secours conforme à l'invention affiche donc toutes les informations essentielles, qui sont représentatives d'un vol de l'aéronef, c'est-à-dire aussi bien les informations de pilotage (vitesse, altitude, attitude) que les informations de navigation (point de route).

De plus, ces informations de pilotage et de navigation sont affichées simultanément sur l'écran de visualisation, le dispositif d'affichage de secours conforme à l'invention pouvant alors suppléer simultanément au moins un écran de navigation et/ou au moins un écran de pilotage, ainsi qu'un second dispositif d'affichage de secours conforme à l'invention, qui sont tous défaillants. A titre d'exemple, le dispositif d'affichage de secours conforme à l'invention peut donc remplacer efficacement lesdits dispositifs ISIS et DDRMI usuels et, ainsi, remédier aux inconvénients précités. De plus, il est en mesure de couvrir toutes les zones du globe terrestre.

En outre, comme l'échelle de cap est indépendante desdits indicateurs de pilotage, la lecture et l'assimilation des différentes informations présentées sont clarifiées et facilitées.

Dans un mode de réalisation préféré, ledit moyen d'affichage présente ladite valeur quantitative sous forme numérique sur ledit écran de visualisation, et ceci à proximité de ladite échelle de cap.

En outre, avantageusement, ledit moyen d'affichage présente de plus sur ladite échelle de cap un second signe caractéristique illustrant le cap courant de l'aéronef. Par conséquent, il suffit au pilote de piloter l'aéronef de manière à sensiblement superposer ledit second signe caractéristique représentatif du cap (ou route) courant de l'aéronef avec ledit premier signe caractéristique représentatif du cap du prochain point de route, pour diriger l'aéronef vers ce prochain point de route. Ainsi, le pilote dispose d'une aide au pilotage simple et efficace.

Par ailleurs, dans un mode de réalisation particulier :
- ledit moyen d'affichage est formé pour présenter ledit premier signe caractéristique à proximité de l'extrémité de ladite échelle de cap correspondant au côté de cette échelle de cap où se trouve ledit prochain point de route, lorsque ce dernier est situé à l'extérieur de ladite échelle de cap telle que présentée sur ledit écran de visualisation ; et/ou
- ledit moyen d'affichage présente de plus, à proximité de ladite échelle de cap, une valeur numérique qui indique le cap dudit prochain point de route, lorsque ce dernier est situé à l'extérieur de ladite échelle de cap telle que présentée sur ledit écran de visualisation.

Grâce à ce dernier mode de réalisation, le pilote connaît toujours le prochain point de route (informations de navigation), même si ce dernier est situé à l'extérieur de ladite échelle de cap présentée sur ledit écran de visualisation et ne peut donc pas être indiqué sur cette échelle de cap.

Les figures du dessin annexé feront bien comprendre comment l'invention peut être réalisée. Sur ces figures, des références identiques désignent des éléments semblables.

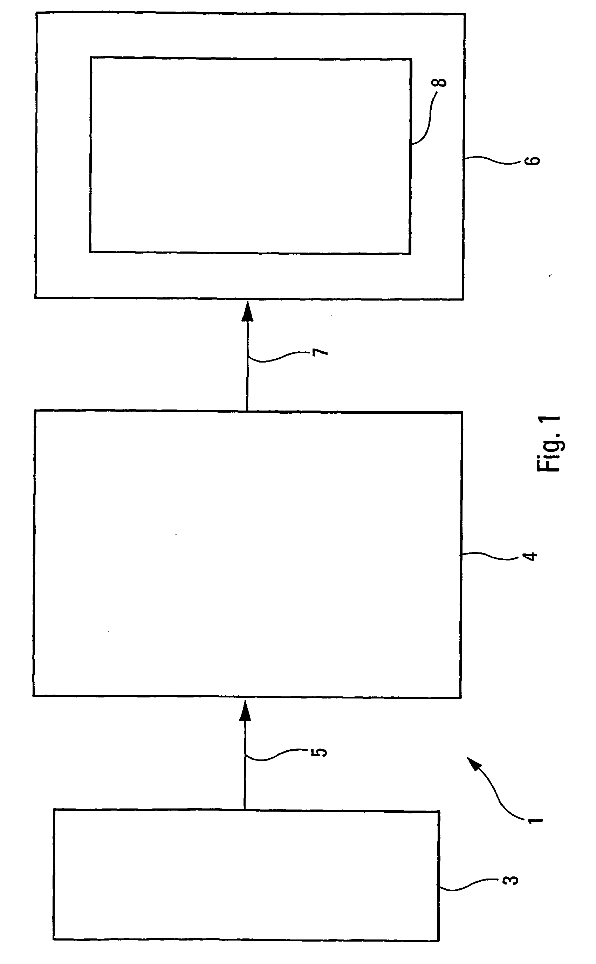

La figure 1 est le schéma synoptique d'un dispositif d'affichage de secours conforme à l'invention.

Les figures 2 et 3 montrent l'affichage réalisé sur un écran de visualisation d'un dispositif d'affichage de secours conforme à l'invention, respectivement dans deux situations différentes.

Le dispositif 1 conforme à l'invention est un dispositif d'affichage de secours d'un aéronef, en particulier d'un avion de transport civil, et peut par exemple être utilisé pour suppléer un dispositif d'affichage principal usuel, notamment un dispositif PFD ou un dispositif ND, en cas de panne de ce dernier.

Ledit dispositif d'affichage de secours 1, qui est embarqué sur l'aéronef, est du type comportant :
- un ensemble 3 de sources d'informations ;
- une unité (centrale) de traitement d'informations 4 qui est reliée par une liaison 5 audit ensemble 3 de sources d'informations et qui est susceptible de traiter des informations issues dudit ensemble 3 de sources d'informations ; et
- un moyen d'affichage 6 qui est relié par une liaison 7 à ladite unité de traitement d'informations 4 et qui est susceptible de présenter, sur au moins un écran de visualisation 8 usuel, des informations traitées issues de ladite unité de traitement d'informations 4.

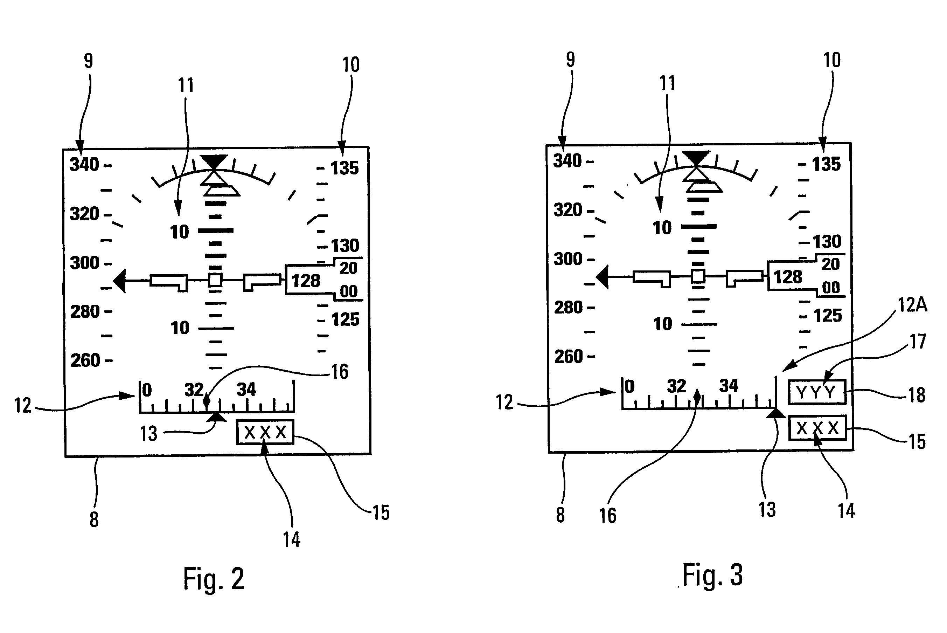

De plus, ledit moyen d'affichage 6 est formé de manière à présenter sur ledit écran de visualisation 8, comme représenté sur les figures 2 et 3 :
- des indicateurs de pilotage usuels 9, 10 et 11, à savoir un indicateur de vitesse 9, un indicateur d'altitude 10 et un indicateur d'attitude 11, illustrant respectivement des informations de vitesse, d'altitude et d'attitude de l'aéronef, reçues de ladite unité centrale 4 ; et
- une échelle de cap 12 comprenant un signe caractéristique 13 illustrant le cap (également reçu de ladite unité centrale 4) d'au moins un prochain point de route usuel d'un plan de vol de l'aéronef.

Selon l'invention, ladite échelle de cap 12 est indépendante desdits indicateurs de pilotage 9, 10 et 11 sur ledit écran de visualisation 8, c'est-à-dire elle n'est pas affichée sur lesdits indicateurs de pilotage 9, 10 et 11, et ledit moyen d'affichage 6 présente, de plus, sur ledit écran de visualisation 8 une valeur quantitative 14 (XXX) qui illustre la distance restant à parcourir à l'aéronef pour atteindre ledit prochain point de route et qui est associée audit signe caractéristique 13 (représentée par exemple sous forme d'une flèche en rose).

Ainsi, grâce au dispositif 1 conforme à l'invention, le pilote connaît à tout moment à la fois le cap (signe caractéristique 13 sur l'échelle 12) et la distance (valeur quantitative 14) du prochain point de route du plan de vol suivi par l'aéronef, ce qui permet de connaître exactement ledit point de route. Le pilote dispose ainsi d'informations de navigation. Ledit dispositif d'affichage de secours 1 affiche donc les informations essentielles, qui sont représentatives du vol de l'aéronef, c'est-à-dire aussi bien les informations de pilotage (vitesse, altitude, attitude) que les informations de navigation (point de route).

De plus, ces informations de pilotage et de navigation sont affichées simultanément sur l'écran de visualisation 8, le dispositif d'affichage de secours 1 conforme à l'invention pouvant alors suppléer simultanément au moins un écran de navigation et/ou au moins un écran de pilotage, qui sont défaillants.

En outre, comme l'échelle de cap 12 est indépendante desdits indicateurs de pilotage 9, 10 et 11, la lecture et l'assimilation des différentes informations présentées sont clarifiées et facilitées pour le pilote, les informations de pilotage et les informations de navigation étant séparées bien que représentées sur le même écran de visualisation 8.

Dans un mode de réalisation préféré, ledit moyen d'affichage 6 présente ladite valeur quantitative 14 sous forme numérique à l'intérieur d'une fenêtre 15 qui est de préférence affichée à proximité de ladite échelle de cap 12 (par exemple juste au-dessous, au-dessus ou à côté de cette dernière), comme représenté sur la figure 2.

En outre, ledit moyen d'affichage 6 présente de plus, sur ladite échelle de cap 12, un signe caractéristique 16 (par exemple un losange en vert) illustrant le cap courant de l'aéronef. Par conséquent, il suffit au pilote de piloter l'aéronef de manière à amener ledit signe caractéristique 16 représentatif du cap courant (ou de la route courante) de l'aéronef sur ledit signe caractéristique 13 représentatif du cap (ou de la route) du prochain point de route, pour diriger l'aéronef vers ce prochain point de route. Le pilote dispose ainsi d'une aide au pilotage simple et efficace.

Par ailleurs, dans un mode de réalisation particulier représenté sur la figure 3 qui est appliqué au cas où le prochain point de route est situé à l'extérieur de la partie d'échelle de cap qui est présentée sur l'écran de visualisation 8 :
- ledit moyen d'affichage 6 présente ledit signe caractéristique 13 (ou un signe caractéristique spécifique non représenté) à proximité de l'extrémité 12A de ladite échelle de cap 12 correspondant au côté de cette échelle de cap 12 où se trouve ledit prochain point de route (c'est-à-dire du côté droit pour l'exemple de la figure 3). A titre d'exemple, le signe caractéristique 13 peut être affiché directement sur l'extrémité 12A comme montré sur la figure 3, ou légèrement à l'extérieur de l'échelle de cap 12 à proximité immédiate de cette extrémité 12A ; et
- ledit moyen d'affichage 6 présente de plus, à proximité de ladite échelle de cap 12, une valeur quantitative 17 (YYY) qui indique le cap dudit prochain point de route et qui est par exemple affiché sous forme numérique dans une fenêtre 18.

Grâce à ce dernier mode de réalisation, le pilote connaît toujours le cap (valeur quantitative 17) et la distance (valeur quantitative 14) du prochain point de route (informations de navigation), même si ce dernier est situé à l'extérieur de la partie d'échelle de cap 12 (correspondant par exemple à 50°) qui est présentée sur ledit écran de visualisation 8.

## Revendications

1. Dispositif d'affichage de secours d'un aéronef, ledit dispositif d'affichage de secours (1) comportant :
- un ensemble (3) de sources d'informations ;
- une unité de traitement d'informations (4) susceptible de traiter des informations issues dudit ensemble (3) de sources d'informations ; et
- un moyen d'affichage (6) qui est susceptible de présenter sur au moins un écran de visualisation (8) des informations traitées issues de ladite unité de traitement d'informations (4) et qui est formé de manière à présenter sur ledit écran de visualisation (8) des indicateurs de pilotage (9, 10, 11) illustrant au moins des informations de vitesse, d'altitude et d'attitude de l'aéronef et une échelle de cap (12),
**caractérisé en ce que** :
- ledit moyen d'affichage (6) est formé de manière à présenter sur ledit écran de visualisation (8), de plus :
• sur l'échelle de cap (12), un premier signe caractéristique (13) illustrant le cap d'au moins un prochain point de route d'un plan de vol de l'aéronef, ladite échelle de cap (12) étant indépendante desdits indicateurs de pilotage (9, 10, 11) sur ledit écran de visualisation (8) ; et
• une valeur quantitative (14) qui illustre la distance restant à parcourir à l'aéronef pour atteindre ledit prochain point de route et qui est associée audit premier signe caractéristique (13) ; et
- ledit dispositif (1) comporte, de plus, un moyen pour déterminer le cas où le prochain point de route est situé à l'extérieur de la partie d'échelle de cap qui est présentée sur l'écran de visualisation (8), ledit moyen d'affichage (6) étant formé pour présenter ledit premier signe caractéristique (13) à proximité de l'extrémité (1 2A) de ladite échelle de cap (12) correspondant au côté de cette échelle de cap (12) où se trouve ledit prochain point de route, lorsque ce dernier est situé à l'extérieur de ladite échelle de cap (12) telle que présentée sur ledit écran de visualisation (8), et ledit moyen d'affichage (6) présentant de plus, à proximité de ladite échelle de cap (12), une valeur numérique (17) qui indique le cap dudit prochain point de route, lorsque ce dernier est situé à l'extérieur de ladite échelle de cap (12).

2. Dispositif selon la revendication 1,
**caractérisé en ce que** ladite unité de traitement d'informations (4) est formée pour fournir le cap courant de l'aéronef, et **en ce que** ledit moyen d'affichage (6) présente de plus sur ladite échelle de cap (12) un second signe caractéristique (16) illustrant ledit cap courant de l'aéronef.

3. Procédé d'aide au pilotage d'un aéronef, au moyen d'un dispositif d'affichage de secours (1) comportant :
- un ensemble (3) de sources d'informations ;
- une unité de traitement d'informations (4) susceptible de traiter des informations issues dudit ensemble (3) de sources d'informations ; et
- un moyen d'affichage (6) qui est susceptible de présenter sur au moins un écran de visualisation (8) des informations traitées issues de ladite unité de traitement d'informations (4),
**caractérisé en ce que**, pour aider le pilote à diriger l'aéronef vers un prochain point de route d'un plan de vol de l'aéronef, ledit moyen d'affichage (6) présente sur ledit écran de visualisation (8), une échelle de cap (12) comprenant un premier signe caractéristique (13) illustrant le cap au moins dudit prochain point de route même si celui-ci est situé à l'extérieur de la partie d'échelle de cap qui est présentée sur l'écran de visualisation, et un second signe caractéristique (16) illustrant le cap courant de l'aéronef.

4. Aéronef,
**caractérisé en ce qu'**il comporte un dispositif d'affichage de secours (1) du type de celui spécifié sous l'une des revendications 1 et 2.

## Patentansprüche

1. Vorrichtung zur Notanzeige in einem Flugzeug, wobei die Vorrichtung zur Notanzeige (1) Folgendes umfasst:
- einen Satz (3) Informationsquellen;
- eine Informationsverarbeitungseinheit (4) zum Verarbeiten von von dem Informationsquellensatz (3) ausgegebenen Informationen; und
- ein Anzeigemittel (6) zum Darstellen von von der Informationsverarbeitungseinheit (4) ausgegebenen verarbeiteten Informationen auf wenigstens einem Anzeigeschirm (8), das so ausgebildet ist, dass es auf dem Anzeigeschirm (8) Steuerindikatoren (9, 10, 11) darstellt, die zumindest Informationen über Geschwindigkeit, Höhe und Lage des Flugzeugs und eine Kursskala (12) zeigen,
**dadurch gekennzeichnet, dass**:
- das Anzeigemittel (6) so ausgebildet ist, dass es auf dem Anzeigeschirm (8) ferner Folgendes darstellt:
• auf der Kursskala (12) ein erstes charakteristisches Zeichen (13), das wenigstens einen nächsten Routenpunkt eines Flugplans des Flugzeugs illustriert, wobei die Kursskala (12) von den Steuerindikatoren (9, 10, 11) auf dem Anzeigeschirm (8) unabhängig ist; und
• einen quantitativen Wert (14), der die von dem Flugzeug zum Erreichen des nächsten Routenpunkts zurückzulegende Restdistanz illustriert und der mit dem ersten charakteristischen Zeichen (13) assoziiert ist; und
- die Vorrichtung (1) ferner ein Mittel zum Ermitteln des Falls umfasst, dass der nächste Routenpunkt außerhalb des auf dem Anzeigeschirm (8) dargestellten Teils der Kursskala liegt, wobei das Anzeigemittel (6) so ausgebildet ist, dass es das erste charakteristische Zeichen (13) in der Nähe des Endes (12A) der Kursskala (12) darstellt, entsprechend der Seite der Kursskala (12), auf der der nächste Routenpunkt liegt, wenn Letzterer außerhalb der Kursskala (12) liegt, wie auf dem Anzeigeschirm (8) dargestellt, und wobei das Anzeigemittel (6) ferner in der Nähe der Kursskala (12) einen Zahlenwert (17) darstellt, der den Kurs des nächsten Routenpunkts anzeigt, wenn dieser außerhalb der Kursskala (12) liegt.

2. Vorrichtung nach Anspruch 1, **dadurch gekennzeichnet, dass** die Informationsverarbeitungseinheit (4) die Aufgabe hat, den laufenden Kurs des Flugzeugs anzugeben, und dadurch, dass das Anzeigemittel (6) ferner auf der Kursskala (12) ein zweites charakteristisches Zeichen (16) darstellt, das den laufenden Kurs des Flugzeugs illustriert.

3. Verfahren zum Unterstützen beim Steuern eines Flugzeugs mittels einer Vorrichtung zur Notanzeige (1), das Folgendes umfasst:
- einen Satz (3) Informationsquellen;
- eine Informationsverarbeitungseinheit (4) zum Verarbeiten von von dem Informationsquellensatz (3) ausgegebenen Informationen; und
- ein Anzeigemittel (6) zum Darstellen von von der Informationsverarbeitungseinheit (4) ausgegebenen verarbeiteten Informationen auf wenigstens einem Anzeigeschirm (8),
**dadurch gekennzeichnet, dass** das Anzeigemittel (6), um den Piloten beim Lenken des Flugzeugs zu einem nächsten Routenpunkt eines Flugplans des Flugzeugs zu unterstützen, auf dem Anzeigeschirm (8) eine Kursskala (12) darstellt, die ein erstes charakteristisches Zeichen (13), das den Kurs zumindest des nächsten Routenpunkts illustriert, selbst wenn dieser außerhalb des auf dem Anzeigeschirm dargestellten Teils der Kursskala liegt, und ein zweites charakteristisches Zeichen (16) umfasst, das den laufenden Kurs des Flugzeugs illustriert.

4. Flugzeug, **dadurch gekennzeichnet, dass** es eine Vorrichtung zur Notanzeige (1) des in Anspruch 1 oder 2 vorgegebenen Typs umfasst.

## Claims

1. An aircraft standby display device, said standby display device (1) comprising:
- a set (3) of information sources;
- an information processing unit (4) capable of processing information emanating from said set (3) of information sources; and
- a display means (6) which is capable of presenting on at least one visualization screen (8) processed information emanating from said information processing unit (4) and which is formed in such a way as to present on said visualization screen (8) piloting indicators (9,10,11) illustrating at least information concerning speed, altitude and attitude of the aircraft and a heading scale (12),
**characterized in that** :
- said display means (6) is formed so as to present on said visualization screen (8), moreover :
• on the heading scale (12), a first characteristic sign (13) illustrating the heading of at least one next route point of a flight plan of the aircraft, said heading scale (12) being independent of said piloting indicators (9, 10, 11) on said visualization screen (8); and
• a quantitative value (14) which illustrates the distance remaining to be traveled by the aircraft to reach said next route point and which is associated with said first characteristic sign (13); and
- said device (1) comprises furthermore a means for determining the case where the next route point is situated outside the heading scale part which is presented on the visualization screen (8), said display means (6) being formed so as to present said first characteristic sign (13) in proximity to the end (12A) of said heading scale (12) corresponding to the side of this heading scale (12) where said next route point is to be found, when the latter is situated outside said heading scale (12) such as presented on said visualization screen(8), and said display means (6) moreover presenting, in proximity to said heading scale (12), a numerical value (17) which indicates the heading of said next route point, when the latter is situated outside said heading scale (12).

2. The device as claimed in claim 1,
**characterized in that** said information processing unit (4) is formed so as to provide the current heading of the aircraft, and **in that** said display means (6) moreover presents on said heading scale (12) a second characteristic sign (16) illustrating said current heading of the aircraft.

3. A method of aiding the piloting of an aircraft, by means of a standby display device (1) comprising:
- a set (3) of information sources;
- an information processing unit (4) capable of processing information emanating from said set (3) of information sources; and
- a display means (6) which is capable of presenting on at least one visualization screen (8) processed information emanating from said information processing unit (4),
**characterized in that**, to aid the pilot in directing the aircraft towards a next route point of a flight plan of the aircraft, said display means (6) presents on said visualization screen (8) a heading scale (12) comprising a first characteristic sign (13) illustrating the heading at least of said next route point, even if the latter is situated outside the heading scale part which is presented on the visualization screen, and a second characteristic sign (16) illustrating the current heading of the aircraft.

4. An aircraft,
**characterized in that** it comprises a standby display device (1) of the type of that specified under any one of claims 1 and 2.
